# EUROPEAN PATENT APPLICATION

(11) **EP 0 827 824 A2**
(43) Date of publication of application: **11.03.1998**
(21) Application number: 97111538.1
(22) Date of filing: 08.07.1997
(51) Int. Cl.: B29D 30/06, B29C 33/30

(54) **Center mechanism of a tyre vulcanizer**

(30) Priority: 09.09.1996 JP 237910/96
(71) Applicant: Mitsubishi Heavy Industries, Ltd., Tokyo (JP)
(72) Inventor: Koga, Yukihiro, c/o Nagasaki Shipyard & M. W., Nagasaki-shi, Nagasaki-ken (JP); Ota, Seiichiro, Nagasaki-shi, Nagasaki-ken (JP)
(74) Representative: Füchsle, Klaus, Dipl.-Ing.

(57) **Abstract**

The present invention provides a center mechanism of a tire vulcanizer, which is of a standing post type such that after tire vulcanization is completed, a bladder (6) inserted in a tire in vulcanizing the tire is extended while decreasing the diameter thereof, the vulcanized tire (18) is unloaded from a mold, and a green tire to be vulcanized next is loaded into the mold, the center mechanism having a lower bead ring (7) fixed to the inner periphery of a lower mold (4), an inner tube (9) which is arranged concentrically with the lower bead ring (7) and to the center of which a center post (10a) for fixing the upper end of the bladder (6) is assembled, and a bladder holding fluid pressure cylinder (15) for moving the inner tube (9) axially with respect to the lower bead ring (7), and being configured so that the lower end of the bladder (6) is held and released by the relative movement between the lower bead ring (7) and the inner tube (9).

## Description

### FIELD OF THE INVENTION AND RELATED ART STATEMENT

The present invention relates to a center mechanism of a tire vulcanizer.

Center mechanisms of a tire vulcanizer, in which a synthetic rubber bladder that is used to prevent a heating/pressurizing medium (steam, hot water, etc.) poured into a tire during tire vulcanization from being in direct contact with the inside surface of the tire is operated, are broadly classified into two types: (1) a center mechanism of a type called a standing post type (for example, see Japanese Patent Provisional Publication No. 57-39941 (No. 39941/1982)), in which upon completion of tire vulcanization, the bladder is extended while decreasing the diameter thereof, so that the vulcanized tire is unloaded from the mold, and a green tire to be vulcanized next is loaded into the mold, and (2) a center mechanism of a type called a bladder storage type (for example, see Japanese Patent Provisional Publication No. 63-104803 (No. 104803/1988)), in which upon completion of tire vulcanization, the diameter of bladder is decreased and the bladder is stored in a storage tube, and then the vulcanized tire is unloaded from the mold, and a green tire to be vulcanized next is loaded into the mold.

In both types of center mechanisms, the bladder, which is an article of consumption, must be changed regularly. In the center mechanism of a standing post type described in the above item (1), the lower end portion of the bladder is interposed between a flange and a lower bead ring and bolted, and the flange is screwed or bolted to the upper end portion of a cylindrical body into which a center post is inserted in such a manner as to be movable vertically. To the upper end portion of the center post, a holding member that holds the upper end of the bladder is fixed by bolting etc.

In a tire vulcanizer, because tire vulcanization is carried out at a high temperature close to 200°C, the elements of the center mechanism is heated to a high temperature. Moreover, the bladder changing operation, especially the removing/reinstalling work of bladder lower end (bolt installing/removing work), is dangerous and takes much time because the work is done in a limited space.

The center mechanism of a bladder storage type described in the above item (2) has already solved the above problems.

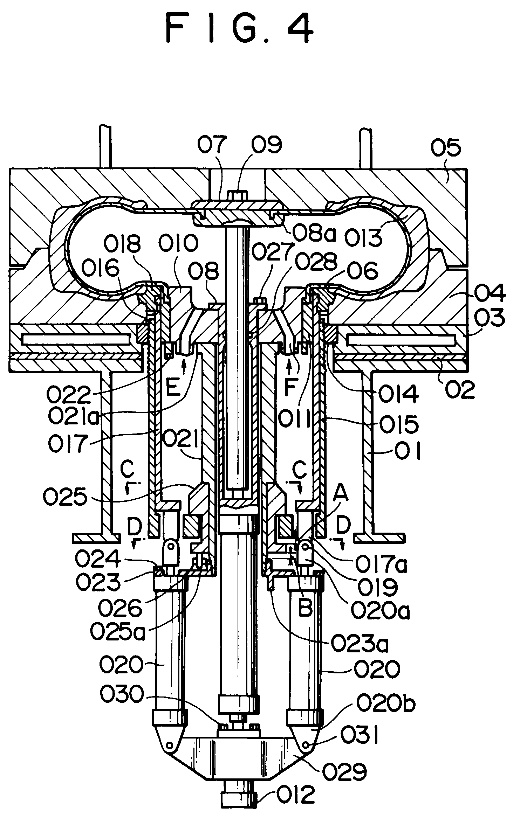

The center mechanism of a bladder storage type will be described with reference to FIG. 4. A heat insulating plate 02 and a lower hot plate 03 are fixed on the upper surface of a base 01 by means of bolts etc., and a lower mold 04 is fixed to the lower hot plate 03 by means of bolts etc. An upper mold 05 is pressurized downward via an upper hot plate etc. by a pressurizing mechanism (not shown).

The upper end of a bladder 06 is fixed by a bladder holder 07, a flange 08a provided at the upper end of a rod of a center post cylinder 08, and a bolt 09. The lower end of the bladder 06 is fixed by a lower ring 010 and a downward pressurizing force of a fluid pressure cylinder 012 applied to a resister ring 011.

The lower ring 010 is formed with holes E and F, and a pressure of a heating medium introduced through the hole E or F is applied to a green tire 013, whereby the green tire 013 is molded and vulcanized by being pressed against grooves formed in the upper and lower molds 04 and 05 and being heated.

A step is provided at the inner periphery of the lower hot plate 03, and a nut 014 is rotatably engaged with a play with the step. The nut 014 is installed to an outer tube 015 by screwing internal threads provided at the inner periphery of the nut 014 onto external threads provided at the outer periphery at the upper part of the outer tube 015.

A guide 016 is fixed to the upper end of the outer tube 015, and an inner tube 017 is provided on the inside surface of the outer tube 015 so as to be slidable with respect to the outer tube 015. The outer periphery at the upper end of the inner tube 017 is formed into a bayonet shape, to which a bead ring 018 having a similar bayonet shape is installed.

The outer periphery of the bead ring 018 is engaged with a play with the inner periphery of the lower mold 04. The inside surface of the inner tube 017 is slidably engaged with a play with the resister ring 011. A connecting plate 017a protrudes from the lower face of the inner tube 017, and a tip end clevis 020a of a rod of a pair of fluid pressure cylinders 020 is connected to a hole formed in the connecting plate 017a via a pin 019.

The resister ring 011 is fixed to an upper end flange 021a of a spacer 021 via a bolt 022. A step is provided at the vertical intermediate portion of the cylindrical body of the spacer 021, and external threads are provided on the outside surface of the cylindrical body below the step. The spacer 021 is installed to a bracket 023 by screwing the external threads into the internal threads at the central portion of the bracket 023. The outer periphery of the bracket 023 is fixed to the fluid pressure cylinder 020 by means of a bolt 024.

The inside surface of a stopper 025 is rotatably engaged with a play with the outside surface of the spacer 021. The upper part of the stopper 025 is formed into an elliptical shape, and a flat plate portion provided on the lower face of the outer tube 015 having a hole of the same shape can pass through to the lower part of the stopper 025. At the lower part of the stopper 025 are provided a pair of claws. One claw is provided with a pin 025a integrally, and the pin 025a is loosely engaged with a hole in a lever 026.

A center post cylinder 08 is fastened and fixed to the lower ring 010 by means of a bolt 027, and the lower end of the center post cylinder 08 is fixed to the tip end of the rod of the fluid pressure cylinder 012 by screwing. A seal member 028 is installed in the center post cylinder 08.

The lower end portion of the fluid pressure cylinder 012 is fastened and fixed to a hole formed in the center of a beam 029 by means of bolts 030. A lower end clevis 020b of the fluid pressure cylinder 020 is connected to a hole formed in the outside portion of the beam 029 by inserting a pin 031.

When tire vulcanization is completed in the state shown in FIG. 4, the upper mold 05 is first raised by an elevating device (not shown), and the lower mold 04 and the upper mold 05 are opened.

After the center post cylinder 08 is actuated in the contraction direction, the paired fluid pressure cylinders 020 are operated in the extension direction. Thus, the vulcanized tire 013 is separated from the lower mold 04, and at the same time the bladder 06 is stored in the inner tube 017, whereby the vulcanized tire 013 can be unloaded, and a green tire to be vulcanized next can be loaded.

If the technology of the bladder storage type center mechanism is adopted to the standing post type center mechanism, in which the bladder is extended while decreasing the diameter thereof when a tire is loaded into or unloaded from the mold, the above-mentioned problems arising on the standing post type center mechanism can be reduced, but the following problem occurs when the mold is changed.

The tire vulcanizer can usually carry out vulcanization of tires with different sizes by the change of mold. Therefore, when the mold is changed, the height of the bead ring 018 with respect to the lower mold attaching surface changes. In the bladder storage type center mechanism shown in FIG. 4, therefore, the height of the lower ring 010 with respect to the bead ring 018 must be adjusted by turning the nut 014.

### OBJECT AND SUMMARY OF THE INVENTION

The present invention was made to solve the above problems, and accordingly an object thereof is to provide a center mechanism of a tire vulcanizer, in which (1) a bladder can be changed safely and rapidly, (2) there is no need for operation such as screw adjustment in changing the mold when tires with different sizes are vulcanized, and (3) the number of parts can be reduced to lower the cost of the center mechanism.

To achieve the above object, the present invention provides a center mechanism of a tire vulcanizer, which is of a standing post type such that after tire vulcanization is completed, a bladder inserted in a tire in vulcanizing the tire is extended while decreasing the diameter thereof, the vulcanized tire is unloaded from a mold, and a green tire to be vulcanized next is loaded into the mold, the center mechanism having a lower bead ring fixed to the inner periphery of a lower mold, an inner tube which is arranged concentrically with the lower bead ring and to the center of which a center post for fixing the upper end of the bladder is assembled, and a bladder holding fluid pressure cylinder for moving the inner tube axially with respect to the lower bead ring, and being configured so that the lower end of the bladder is held and released by the relative movement between the lower bead ring and the inner tube.

As described above, according to the present invention, there is provided a center mechanism of a tire vulcanizer, which is of a standing post type such that after tire vulcanization is completed, a bladder inserted in a tire in vulcanizing the tire is extended while decreasing the diameter thereof, the vulcanized tire is unloaded from a mold, and a green tire to be vulcanized next is loaded into the mold, the center mechanism having a lower bead ring fixed to the inner periphery of a lower mold, an inner tube which is arranged concentrically with the lower bead ring and to the center of which a center post for fixing the upper end of the bladder is assembled, and a bladder holding fluid pressure cylinder for moving the inner tube axially with respect to the lower bead ring, and being configured so that the lower end of the bladder is held and released by the relative movement between the lower bead ring and the inner tube. Therefore, a bladder can be changed safely and rapidly, and the need for operation such as screw adjustment can be eliminated in changing a mold when tires with different sizes are vulcanized. Also, the need for screw adjustment can be eliminated, and the number of parts can be reduced, thereby decreasing the cost of the center mechanism.

### BRIEF DESCRIPTION OF THE DRAWINGS

FIG. 1 is a longitudinal side sectional view of a center mechanism of a tire vulcanizer in accordance with the present invention, the left side of the line Y-Y showing a state in which a tire is being vulcanized, and the right side of the line Y-Y showing a state in which vulcanization is completed, the molds are opened, and the bladder is extended while decreasing the diameter thereof;
FIG. 2 is an enlarged longitudinal side sectional view of X portion of FIG. 1;
FIG. 3 is an enlarged longitudinal side sectional view of X portion of FIG. 1; and
FIG. 4 is a longitudinal side sectional view of a conventional center mechanism of a tire vulcanizer.

### DETAILED DESCRIPTION OF PREFERRED EMBODIMENTS

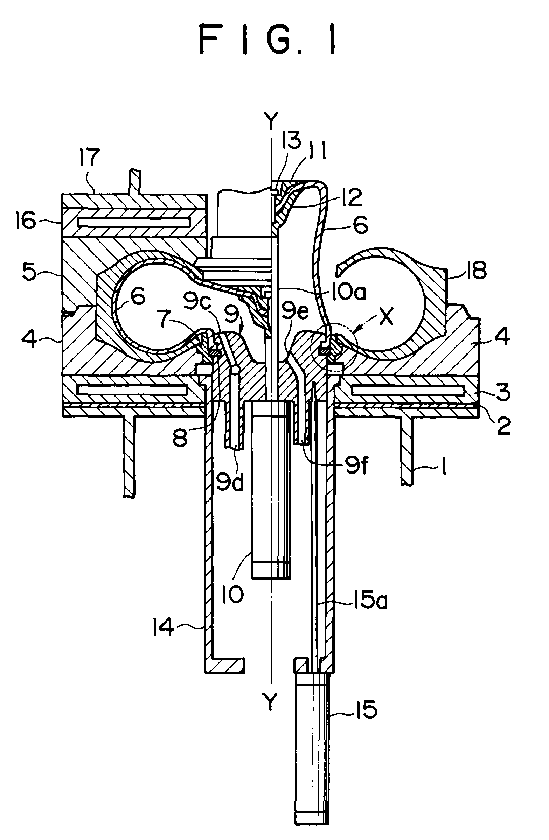

A center mechanism of a tire vulcanizer in accordance with the present invention will be described below with reference to one embodiment shown in FIGS. 1 to 3.

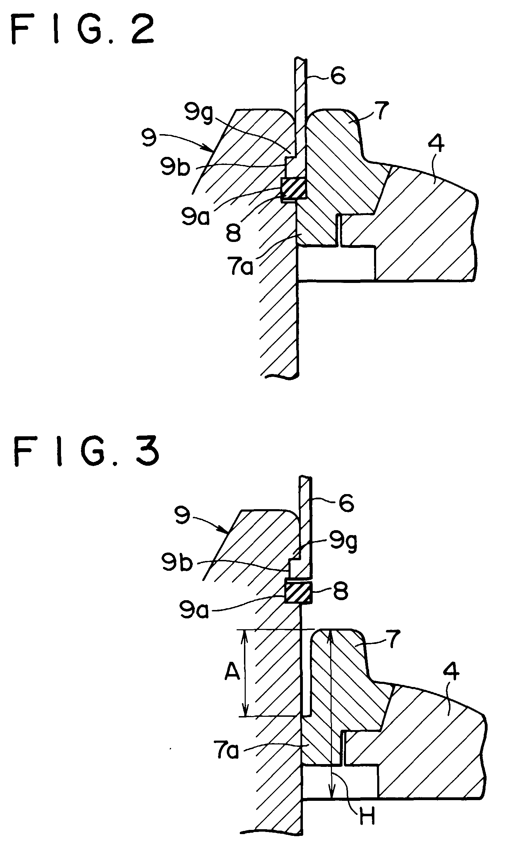

FIG. 1 is a longitudinal side sectional view of a center mechanism of a tire vulcanizer in accordance with the present invention, the left side of the line Y-Y showing a state in which a tire is being vulcanized, and the right side of the line Y-Y showing a state in which vulcanization is completed, the molds are opened, and the bladder is extended while decreasing the diameter thereof. FIGS. 2 and 3 are an enlarged longitudinal side sectional views of X portion of FIG. 1.

In FIGS. 1 to 3, reference numeral 1 denotes a base for a tire vulcanizer, 2 denotes a heat insulating plate, 3 denotes a lower hot plate fixed to the base 1 via the heat insulating plate 2 by means of bolts etc., 4 denotes a lower mold fixed to the hot plate 3 by means of bolts etc., and 7 denotes a lower bead ring bolted to the lower mold 4. On the inner peripheral surface of the lower bead ring 7, a ring-shaped protrusion 7a is formed.

Reference numeral 17 denotes a bolster plate assembled to the base 1 in such a manner as to be movable vertically. The bolster plate 17 is moved vertically by a driving device (not shown).

Reference numeral 16 denotes an upper hot plate fixed to the bolster plate 17 via a heat insulating plate, 5 denotes an upper mold fixed to the upper hot plate 16 by means of bolts, 14 denotes an outer tube of center mechanism provided downward at the inner periphery of the lower hot plate 3, 9 denotes an inner tube assembled to the outer tube 14 in such a manner as to be slidable vertically, 15 denotes a bladder holding fluid pressure cylinder fixed to the outer tube 14, and 15a denotes a piston rod of the bladder holding fluid pressure cylinder 15. The tip end of the piston rod 15a is connected to the inner tube 9, so that the inner tube 9 is moved vertically by actuating the bladder holding fluid pressure cylinder 15 in the extension/contraction direction. Ring-shaped grooves 9a and 9b having two kinds of depths are provided in the outer peripheral surface of the inner tube 9, and a ring-shaped protrusion 9g is formed on the outer peripheral surface of the inner tube 9 at a position above the ring-shaped groove 9b.

Reference numeral 8 denotes a split ring capable of being divided into two pieces. The split ring 8 is inserted in the ring-shaped groove 9a, and the lower end of a bladder 6 is inserted between the ring-shaped protrusion 9g and the split ring 8.

A conventional post cylinder 10 and a post 10a that is moved vertically by the actuation of the post cylinder 10 are assembled to the central portion of the inner tube 9. To the upper end of the post 10a, a bladder holder 11 for holding the upper end of the bladder 6 and a bladder receiver 12 are fastened and fixed by means of a bolt 13. In the vicinity of the outer periphery on the upper surface of the inner tube 9, a plurality of supply openings 9c for a heating/pressurizing medium are provided in the circumferential direction. In the vicinity of the central portion of the inner tube 9, a discharge opening 9e for the heating/pressurizing medium is provided. One end of respective passages 9d and 9f is connected to the discharge opening 9e. The other end of the respective passages 9d and 9f is connected to a heating/pressurizing medium supply device via a switching valve (not shown).

Next, the operation of the tire vulcanizer will be described in detail.

It is assumed that the vulcanizer is in a state such that vulcanization is completed, the bladder 6 is extended while decreasing the diameter thereof (see the right half of FIG. 1), a vulcanized tire 18 is taken out of the mold, and the change of the bladder 6 is started (see FIG. 2). From this state, the bladder holding fluid pressure cylinder 15 is actuated, by which the piston rod 15a is pushed out and the inner tube 9 is raised. Thus, the bladder 6 is pushed by the split ring 8, being moved vertically together with the inner tube 9. When the split ring 8 is raised sufficiently high from the upper face of the lower bead ring 7 (see FIG. 3), the upward movement of the inner tube 9 is stopped, and the split ring 8 is removed.

Then, the center post 10a is lowered by removing the bolt 13 (by removing the bladder holder 11 if necessary). After the bladder 6 (or the bladder 6, bladder holder 11, and bladder receiver 12) is hung to the outside of the machine, a bladder 6 to be used next is hung into the machine, and the lower end of the bladder 6 is inserted in the ring-shaped groove 9b by tilting the bladder 6 or by other means.

Next, the center post 10a is raised properly, and then the upper end of the bladder 6 is held by the holding means 11 and 12 by reversing the above procedure, and the upper end of the center post 10a is fixed by the bolt 13.

Subsequently, the center post 10a is raised slightly, and the lower end of the bladder 6 is inserted in the ring-shaped groove 9b. The split ring 8, which has been removed from the ring-shaped groove 9a, is inserted in the ring-shaped groove 9a. The bladder holding fluid pressure cylinder 15 is actuated in a manner reverse to the above to lower the inner tube 9. Thus, the lower end of the bladder 6 is drawn into the lower bead ring 7, and the split ring 8 abuts on the ring-shaped protrusion 7a of the lower bead ring 7, whereby the downward movement of the inner tube 9 is stopped (see FIG. 2), which completes the change work of the bladder 6.

Accordingly, as shown in FIG. 3, if fabrication has been carried out so that dimension A between the upper face of the lower bead ring 7 and the abutting face between the ring-shaped protrusion 7a and the split ring 8 is a predetermined dimension, the positional relationship between the lower bead ring 7 and the bladder 6 is established regardless of the value of height H between the lower face of the lower mold 4 and the upper face of the lower bead ring 7.

After the change work of the bladder 6 is completed, the loading, shaping, vulcanization, etc. of a tire to be vulcanized are carried out by the conventional procedure. At this time, a force to push down the inner tube 9 is applied to the inner tube 9 by the pressure of the heating/pressurizing medium poured into the tire via the bladder 6. This push-down force gives a holding force for holding the lower end of the bladder 6 (during tire vulcanization, this push-down force is far higher than the required holding force, so that the surplus force is transmitted to the lower bead ring 7 from the stepped portion of the ring-shaped grooves 9a and 9b via the split ring 8). Therefore, the fluid pressure cylinder 15 is sufficient if it delivers a push-out force for pushing out the lower end of the bladder 6 and a pull-in force for drawing the lower end of the bladder 6.

FIG. 1 shows a state in which the vulcanized tire 18 remains in the lower mold 4. The means for taking the vulcanized tire 18 out of the mold, the means for taking the vulcanized tire 18 out of the mold after the vulcanized tire 18 is raised together with the upper mold 5 when the upper mold 5 is raised, and other means are publicly known, so that the detailed explanation thereof is omitted.

## Claims

1. A center mechanism of a tire vulcanizer, which is of a standing post type such that after tire vulcanization is completed, a bladder inserted in a tire in vulcanizing the tire is extended while decreasing the diameter thereof, the vulcanized tire is unloaded from a mold, and a green tire to be vulcanized next is loaded into the mold, said center mechanism having a lower bead ring fixed to the inner periphery of a lower mold, an inner tube which is arranged concentrically with said lower bead ring and to the center of which a center post for fixing the upper end of the bladder is assembled, and a bladder holding fluid pressure cylinder for moving said inner tube axially with respect to said lower bead ring, and being configured so that the lower end of said bladder is held and released by the relative movement between said lower bead ring and said inner tube.

2. A tire vulcanizer having a center mechanism, which is of a standing post type such that after tire vulcanization is completed, a bladder inserted in a tire in vulcanizing the tire is extended while decreasing the diameter thereof, the vulcanized tire is unloaded from a mold, and a green tire to be vulcanized next is loaded into the mold, said center mechanism having a lower bead ring fixed to the inner periphery of a lower mold, an inner tube which is arranged concentrically with said lower bead ring and to the center of which a center post for fixing the upper end of the bladder is assembled, and a bladder holding fluid pressure cylinder for moving said inner tube axially with respect to said lower bead ring, and being configured so that the lower end of said bladder is held and released by the relative movement between said lower bead ring and said inner tube.
